# FASCICULE DE BREVET EUROPEEN

(11) **EP 2 633 912 B1**
(45) Date de publication et mention de la délivrance du brevet: **28.12.2016**
(21) Numéro de dépôt: 13159197.6
(22) Date de dépôt: 14.03.2006
(51) Int. Cl.: B01L 3/00, B01L 9/00, C12M 1/18, G01N 33/487

(54) **Dispositif pour séparer par filtration verticale des particules biologiques contenues dans un liquide.**
Vorrichtung zum Trennen durch vertikale Filtrierung von biologischen Partikeln, die in einer Flüssigkeit enthalten sind
Device for separating by vertical filtration of biological particles contained in a liquid

(30) Priorité: 24.03.2005 FR 0502945
(43) Date de publication de la demande: 04.09.2013
(62) Demande divisionnaire de: 06726089.3
(73) Titulaire: INSTITUT NATIONAL DE LA SANTE ET DE LA RECHERCHE MEDICALE (INSERM), 75013 Paris (FR); ASSISTANCE PUBLIQUE, HOPITAUX DE PARIS, 75004 Paris (FR); UNIVERSITE PARIS DESCARTES, 75270 Paris Cedex 06 (FR)
(72) Inventeur: Paterlini-Brechot, Patrizia, 75015 PARIS (FR)
(74) Mandataire: Lavoix

(56) Documents cités:
- WO-A-2005/021130
- FR-A1- 2 657 543
- FR-A1- 2 782 730
- FR-A1- 2 824 144

## Description

La présente invention est relative à la séparation de particules biologiques contenues dans un liquide, susceptibles d'être séparées sur la base de leur taille, la séparation se faisant par filtration verticale à l'aide d'un filtre adapté à la nature des particules à isoler. Les particules sont isolées notamment à des fins de purification ou d'analyse et éventuellement de diagnostic.

Afin de développer des méthodes de diagnostic non invasives notamment dans le domaine prénatal, ou des méthodes de diagnostic précoce, notamment dans le domaine de la cancérologie, il a été proposé dans les demandes de brevet FR 2 782 730 et FR 2 824 144, de rechercher des cellules caractéristiques rares dans des liquides biologiques prélevés sur des patients. Dans ces méthodes, les cellules à détecter sont recherchées par une opération d'enrichissement par filtration en utilisant notamment une machine de filtration de type ISET telle que la machine qui est décrite dans le brevet WO 91/11245. Ces méthodes consistent à filtrer à travers un filtre dont les pores ou porosités sont adaptés, un liquide biologique ayant éventuellement subi une préparation spécifique, de telle sorte que les cellules recherchées forment sur le filtre un résidu de filtration qui est ensuite analysé. La porosité du filtre, la préparation du liquide biologique et la méthode d'analyse sont choisies en fonction de la nature des cellules recherchées.

Ces méthodes ont été développées initialement en utilisant un appareil de filtration conçu pour rechercher des particules dans du lait à des fins de contrôle de la qualité. Bien que des adaptations nécessaires compte tenu de la nature des liquides filtrés et des particules recherchées, aient été réalisées, ces méthodes présentent encore des inconvénients. En particulier, le sang est difficile à filtrer.

Dans environ 30% des cas, la filtration de ce liquide est interrompue par des colmatages qui la rendent inutilisable.

Par ailleurs, le dispositif utilisé pour contenir l'échantillon de liquide à filtrer comprend un mécanisme pour obtenir l'étanchéité très peu commode d'emploi.

Enfin, et d'une façon générale, la fiabilité de la filtration qui est suffisante pour une utilisation à titre expérimental dans un laboratoire est insuffisante pour une utilisation à des fins de diagnostic en série.

Le but de la présente invention est de remédier à cet inconvénient en proposant un moyen pour fiabiliser l'opération d'isolation par filtration verticale de cellules contenues dans un liquide ou plus généralement de séparation de particules biologiques d'un liquide qui les contient de façon à la rendre adaptée notamment à une utilisation à des fins de diagnostic.

A cet effet, l'invention contemple un procédé pour séparer, à des fins de purification ou d'analyse et éventuellement de diagnostic, des particules biologiques et le liquide qui les contient, comprenant au moins une étape de filtration verticale à travers un filtre dont la porosité est adaptée à la nature des particules biologiques qu'on souhaite séparer afin que lesdites particules biologiques soient retenues par le filtre, caractérisé en ce que on utilise un filtre comprenant au moins une zone élémentaire de filtration, chaque zone élémentaire de filtration ayant une surface limitée, et en ce que on choisit la surface de chaque zone élémentaire de filtration et le nombre de zones élémentaires de filtration en fonction de la nature du liquide à filtrer, de la nature des particules biologiques à séparer et du volume du liquide à filtrer.

Chaque zone élémentaire de filtration dudit procédé a une surface égale à celle d'un disque de diamètre compris entre 0,6 cm et 3 cm, et le nombre de zones élémentaires de filtration est choisi pour que le rapport du volume de liquide filtré à la surface de filtration soit inférieure à 40 ml/ cm², et de préférence supérieure à 0,14 ml/ cm².

De préférence, chaque zone élémentaire de filtration a une surface égale à celle d'un disque ayant un diamètre supérieur ou égal à 0,8 cm.

De préférence, le filtre a des pores calibrés d'une taille comprise entre 3 µm et 100 µm et une densité de pores comprise entre 3 x 10³ et 5 x 10⁶ pores/ cm².

De préférence, la filtration est réalisée par une dépression comprise entre 0,05 bar et 1 bar avec, éventuellement, une surpression inférieure à 1 bar.

Pour effectuer la filtration, il est préférable d'utiliser un filtre constituant un badge adapté pour être associé à un moyen d'analyse des résidus de filtration en repérant les zones élémentaires de filtration.

De préférence, le badge constituant le filtre est incorporé à un module de filtration à usage unique comprenant au moins un réservoir pour contenir le liquide à filtrer, et susceptible d'être traité avant usage afin d'être stérilisé ou d'être exempt d'enzymes qui digèrent l'ADN, l'ARN ou les protéines.

Les particules biologiques à séparer sont, par exemple, des cellules. Dans ce cas, préalablement à la filtration du liquide contenant des cellules, on peut préparer un échantillon de liquide à filtrer à partir d'un échantillon de liquide contenant des cellules tel qu'un liquide biologique ou une culture cellulaire en effectuant un préenrichissement en cellules à séparer et/ou une dilution.

Le liquide contenant des cellules peut être du sang et, de préférence, le filtre a alors des pores calibrés d'une taille comprise entre 5 µm et 25 µm.

Les particules biologiques peuvent également être des fibrines.

Le liquide contenant les particules biologiques est de l'urine et les pores calibrés du filtre ont une taille comprise ente 8 µm et 100 µm.

Le procédé peut être utilisé pour la détection, à des fins de diagnostic, de cellules du type cellules tumorales, foetales, endothéliales, fibroblastiques, musculaires, nerveuses, monocytaires, cellules souches, cellules d'organes, précurseurs, cellules hématopoïétiques, dans une liquide biologique du type sang, urine, ascite, liquide céphalorachidien, lait, épanchement pleural, liquide de lavage du col de l'utérus, liquide de suspension de cellules obtenues par prélèvement par biopsie, par méthode chirurgicale, par rinçage de la bouche, ou pour la détection de cellules animales ou végétales.

L'invention concerne un module de filtration pour la mise en oeuvre du procédé, lequel module comprend :
- un bloc réservoir comprenant au moins un compartiment fermé à sa partie inférieure par un fond comportant au moins une ouverture;
- un tiroir support de filtre comprenant au moins un trou, chaque trou étant disposé en regard d'une ouverture du bloc réservoir ;
- un filtre enserré entre la face inférieure du bloc réservoir et le tiroir support. Dans ce module, les dimensions de chaque ouverture du fond du bloc réservoir et les dimensions de chaque trou du tiroir support de filtre sont adaptés pour que chaque couple constitué d'une d'ouverture du fond du bloc réservoir et du trou du tiroir support de filtre associé, définissent une zone de filtration élémentaire de surface limitée et en ce que le volume utile de chaque compartiment est proportionnel au nombre de zones de filtration élémentaire situées au fond du compartiment.

Le filtre comporte des pores de taille comprise entre 3 µm et 100 µm et une densité de pores comprise entre 3 x 10³ et 5 x 10⁶ pores/cm². La surface d'une zone élémentaire de filtration est égale à celle d'un disque ayant un diamètre équivalent compris entre 0,6 cm et 3 cm, et le rapport du volume utile de chaque compartiment à la somme des surfaces des ouvertures que comporte le fond du compartiment est inférieur à 40 ml/ cm², et de préférence supérieur à 0,14 ml/ cm².

De préférence, les dimensions d'au moins une ouverture du fond du bloc réservoir et d'un trou correspondant du tiroir support de filtre sont adaptés pour que la surface de la zone élémentaire de filtration correspondante soit supérieure ou égale à celle d'un disque de 0,8 cm de diamètre.

De préférence, au moins un compartiment peut être divisé en compartiments partiels par au moins une paroi de séparation amovible, de telle sorte qu'au moins un compartiment partiel comporte dans son fond au moins une ouverture et que le rapport du volume dudit compartiment partiel à la somme des surfaces des ouvertures du fond du compartiment partiel soit inférieur à 40 ml/ cm², et de préférence supérieur à 0,14 ml/ cm².

De préférence, le module de filtration comprend un joint d'étanchéité strié disposé entre le fond du bloc réservoir et le filtre, comportant au moins un trou correspondant à un trou du fond du bloc réservoir, le trou étant entouré d'au moins une lèvre en saillie.

De préférence également, le module de filtration comprend, en outre, entre le filtre et le support de filtre, un joint plaque comportant au moins une ouverture en regard d'un trou du support de filtre.

Le filtre peut constituer un badge dont la partie centrale comporte au moins une zone poreuse et dont la périphérie constitue un cadre comportant des moyens d'indexation de sa position sur le support de filtre.

Les moyens d'indexation sont, par exemple, au moins deux trous de diamètre différents destinés à coopérer avec des pions de diamètres correspondant prévus sur le support de filtre.

De préférence, le module de filtration comporte, en outre, au moins, un bouchon pour la fermeture de l'ouverture supérieure d'un compartiment.

De préférence, le bloc réservoir comporte, à sa partie inférieure, un rebord s'étendant vers l'extérieur et coopérant avec au moins un axe d'assemblage permettant de serrer le filtre entre le support de filtre et le bloc réservoir, l'axe d'assemblage comportant une extrémité sécable s'étendant au dessus du rebord du bloc réservoir.

De préférence, toutes ses pièces sont constituées de matériaux adaptés à une opération de stérilisation ou destinée à les rendre exemptes de RNAse, DNAse ou protéinases.

Un support d'un module de filtration destiné à maintenir un module de filtration sur une machine de filtration, comprenant au moins un excentrique mobile entre une position d'ouverture et une position de serrage, destiné à mettre en pression le filtre entre le support de filtre et le bloc réservoir est également divulgué.

De préférence, au moins un excentrique est adapté pour que, lorsque le module de filtration comporte au moins un axe de fixation dont une extrémité est sécable, l'extrémité d'au moins un axe de fixation soit coupée lors de la mise en pression du filtre par au moins un excentrique.

Le bloc de support fait partie d'une machine de filtration.

De préférence, le module de filtration comprend, en outre, un moyen destiné à coopérer avec un moyen complémentaire d'un bloc support, de façon à imposer l'orientation du module de filtration par rapport au bloc support, et le bloc support comporte un moyen destiné à coopérer avec un moyen d'un module de filtration, de façon à indexer l'orientation du module de filtration par rapport au bloc support.

L'invention va maintenant être décrite plus en détail mais de façon non limitative en regard des dessins annexés dans lesquels :
- la figure 1 est une vue en perspective d'un module de filtration associé à un bloc support de module de filtration ;
- la figure 2 est une vue éclatée en perspective d'un module de filtration ;
- les figures 3A et 3B sont deux vues en coupe d'un bloc réservoir d'un module de filtration ;
- la figure 4 est une vue en perspective avec coupe d'un joint d'étanchéité strié ;
- les figures 5A et 5B sont des vues en perspective, notamment avec une coupe, d'un tiroir support de filtre ;
- la figure 6A est une vue en perspective d'un module de filtration disposé sur un bloc support ;

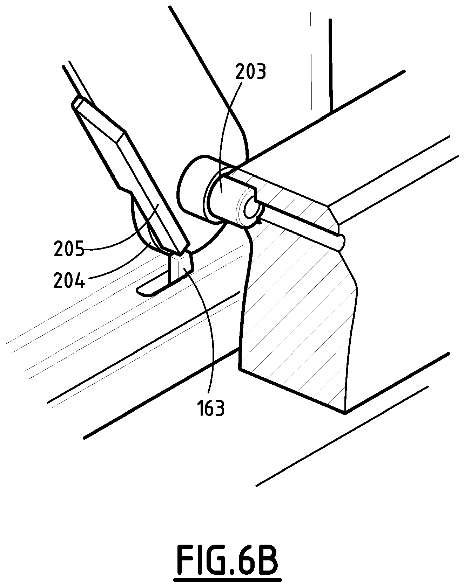

- la figure 6B est une vue en perspective agrandie des moyens de serrage de la base d'un module de filtration disposé sur un bloc support du module de filtration ; et
- la figure 7 est une vue en perspective séparée d'un module de filtration après utilisation, dans laquelle le bloc réservoir est séparé du tiroir support de filtre comportant un filtre.
- la Figure 8 est une vue en perspective d'un module de filtration selon une variante.
- la Figure 9 est une vue en perspective d'un badge-filtre.

La méthode pour isoler des particules biologiques contenues dans un liquide consiste à filtrer le liquide sur un filtre aux caractéristiques adaptées à la nature des particules à isoler. Les particules biologiques peuvent être des cellules, des globules rouges, des agrégats de plaquettes, des fibrines ou des déchets tissulaires. Le liquide filtré est notamment un liquide obtenu à partir d'un prélèvement de liquide biologique ayant subi éventuellement un traitement préalable destiné à faciliter l'opération d'isolation par filtrage. Cette opération préalable, qui sera décrite plus en détails ultérieurement, comporte en général, notamment lorsque les particules à isoler sont des cellules, une ou plusieurs des opérations suivantes : traitement chimique destiné à effectuer un pré enrichissement en cellule à isoler, dilution, traitement chimique destiné à faciliter la séparation par filtration des cellules à isoler.

Outre ces conditions de préparation d'échantillon de liquide à filtrer, les inventeurs ont constaté que pour obtenir une bonne fiabilité du processus d'isolation des cellules à détecter, il était nécessaire d'adapter certaines caractéristiques du filtre au volume de liquide filtré. En particulier, le filtre doit être divisé en zones élémentaires de filtration ayant chacune une surface égale à celle d'un disque de diamètre compris entre 0,6 cm et 3 cm, et de préférence supérieur à 0,8 cm et mieux encore compris entre 0,8 cm et 1,5 cm. Les zones de filtration élémentaire peuvent avoir, par exemple, une forme de disque.

En outre, la quantité de liquide à filtrer qui doit passer à travers chacune des zones élémentaires de filtration doit être comprise entre 1 ml et 100 ml, de préférence ce volume doit être compris entre 8 ml et 15 ml.

Ainsi, pour filtrer un échantillon déterminé on devra utiliser un dispositif qui détermine sur le filtre un nombre de zones élémentaires de filtration proportionnel au volume de l'échantillon à filtrer.

En général, le volume de l'échantillon à filtrer dépend d'une part du volume du prélèvement de liquide biologique qui a pu être fait initialement, et d'autre part d'une éventuelle dilution qui dépend notamment de la nature des particules biologiques à séparer. Le volume du prélèvement dépend notamment de la nature du liquide prélevé et de l'age du patient sur lequel ce liquide est prélevé. L'homme du métier sait déterminer les volumes des prélèvements en fonction de la nature du liquide prélevé et du patient sur lequel le prélèvement est effectué.

La dilution est fonction notamment du nombre de particules par unité de volume que l'on peut retrouver dans le liquide prélevé. En effet, pour que la filtration se fasse dans des conditions satisfaisantes, il est souhaitable que le nombre de particules à isoler par unité de volume du liquide à filtrer ne soit pas trop importante afin d'éviter le colmatage du filtre. Par ailleurs, lorsque le procédé est destiné à détecter des cellules particulières rares mélangées à des cellules en beaucoup plus grand nombre, le nombre de cellules par unité de volume ne doit pas être trop faible, de façon à obtenir une probabilité raisonnable de retrouver des cellules recherchées sur le filtre. L'homme du métier sait également déterminer ces taux de dilution en fonction de la nature du liquide considéré et du type de cellule recherchée.

L'échantillon biologique qui fait l'objet d'un prélèvement sur un patient peut être, par exemple, du sang, de l'urine, de l'ascite, du liquide céphalorachidien, du lait, de l'épanchement pleural ; ce peut être aussi du liquide de lavage du col de l'utérus ou encore tout autre liquide qui peut résulter d'un prélèvement d'échantillon biologique sur un patient.

La méthode d'analyse peut également être utilisée pour rechercher des cellules dans des échantillons qui ne sont pas directement prélevés sur des patients, et par exemple, dans des échantillons prélevés dans des milieux de culture cellulaire effectuée à partir de frottis ou de biopsie ou de prélèvement de tissu humain ou animal ou encore dans des milieux de culture cellulaire humaine ou animale en lignée.

Lorsque le liquide biologique prélevé est du sang, la quantité prélevée est généralement comprise entre 1 ml et 20 ml, et le sang est dilué dans un rapport variant de 1 à 5, à 1 à 20, pour obtenir un échantillon de liquide à filtrer qui, dans ces conditions, est filtré sur une à 20 zones élémentaires de filtration.

Pour tous les autres liquides, les prélèvements sont de l'ordre de 5 ml à 10 ml et sont dilués dans un rapport de 1 à 2, à 1 à 10, ou éventuellement ne sont pas dilués. Ces échantillons sont filtrés sur un nombre de zones élémentaires de filtration qui peut atteindre 5 voire plus, en particulier lorsqu'il s'agit d'un prélèvement de 10 ml qui a été dilué dans un rapport de 1 à 10.

La nature des cellules susceptibles d'être recherchées sont notamment des cellules tumorales, des cellules foetales, des cellules endothéliales, des cellules fibroblastiques, des cellules musculaires, des cellules nerveuses, des cellules monocytaire, des cellules souches, des cellules d'organes (hépatiques, rénales, etc...), des précurseurs, des cellules d'hématopoïétiques. Cette liste, donnée à titre d'exemple, n'est pas limitative.

Avant filtration, les cellules peuvent être pré-enrichies par un traitement du type gradient densité ou par lyse des cellules ne présentant pas d'intérêt, ou par des méthodes immunomédiées, par tri positif et négatif, par stimulation à la prolifération des cellules recherchées, etc...

Cette liste n'est pas limitative, et l'homme du métier sait choisir le procédé de pré-enrichissment adapté à la nature des cellules qu'il cherche à isoler.

Outre le traitement de pré-enrichissement, l'échantillon de liquide contenant des cellules peut être traité par un réactif fonction de la nature des cellules recherchées, afin de faciliter l'opération de séparation par filtration.

Le traitement peut avoir pour but de lyser les globules rouges et anticoaguler le sang si l'échantillon biologique contient du sang, et consiste par exemple, en une addition de saponine et de ETDA.

Le traitement peut également avoir pour but de fixer des cellules nucléées, par exemple avec une addition de formaldéide, si la filtration vise à isoler les cellules fixées. Dans ce cas le traitement a pour but de rendre l'enrichissement possible.

Si la filtration vise à isoler des cellules non fixées, l'échantillon biologique peut être traité avec un réactif et des conditions adaptés pour assurer la rigidification transitoire des membranes biologiques (par exemple, par addition de polysaccharide, de DMSO, par le froid, etc...).

L'homme du métier sait choisir la méthode la plus adaptée, en fonction de la nature des cellules recherchées.

L'échantillon biologique qui, éventuellement, a été dilué, pré-enrichi ou traité par un réactif pour permettre une filtration adaptée au but poursuivi, est alors filtré à travers un filtre en polycarbonate ou en un matériau équivalent ayant des pores calibrés d'une taille comprise entre 1 et 100 µm et adaptée à la nature des particules à séparer. Cette taille est, de préférence, comprise entre 3 µm et 25 µm, et par exemple de 8 µm environ, notamment lorsqu'il s'agit d'isoler des cellules tumorales ou épithéliales.

La densité des pores est adaptée à la nature des particules à séparer. De préférence, la densité de pores du filtre est comprise entre 5 x 10³ et 5 x 10⁶ pores/ cm² et mieux entre 5 x 10⁴ et 5 x 10⁵ pores/ cm².

La filtration est réalisée de préférence par une dépression entre 0,05 bar et 1 bar, et de préférence de l'ordre de 0,1 bar. Eventuellement la filtration peut être assistée par une légère surpression du liquide situé au dessus du filtre. Cette surpression doit cependant rester inférieure à 1 bar. Ces conditions sont particulièrement adaptées à la séparation de cellules.

Le procédé peut être utilisé pour différents objectifs, par exemple pour rechercher des cellules rares en suspension dans un liquide biologique, afin de permettre un diagnostic ou pour épurer un liquide afin de permettre l'analyse dans de bonnes conditions des éléments en solution.

Lorsque le procédé est utilisé pour rechercher des cellules et les analyser, après filtration, le filtre qui a servi à filtrer le liquide est récupéré en faisant en sorte que les zones de filtration soient bien identifiées et que l'on puisse faire le lien entre ces zones de filtration et l'échantillon qui a été filtré. Le filtre est alors utilisé pour effectuer une analyse des cellules qui ont pu être récupérées dans les zones de filtration.

Ces méthodes d'analyse, connues en elles-mêmes, sont par exemple du type : coloration cytologique (hématoxyline, eosine, etc...), immunomarquage (immunohistochimie, immunofluorescence) PNA, FISH, PRINS, PCR in situ ou autre technique moléculaire, spectrophotométrie, microdissection laser suivie d'analyses moléculaires ciblées sur l'ADN (extraction de l'ADN, génotypage, PCR quantitative, analyse de mutations, CGH (comparative genomic hybridization)) ARN (extraction et analyse par PCR des transcrits, PCR quantitatives) et protéines (extraction des protéines, microséquençages, etc...).

Les analyses moléculaires peuvent être réalisées sur des cellules enrichies retenues sur le filtre transposées sur une lame par une technique similaire à celle de Southern, micro-disséquées individuellement à partir du filtre ou de la lame selon des critères définis (caractéristiques morphologiques des cellules avec ou sans marquage de différentes natures) et soumises à analyse moléculaire individuellement ou poolées.

Les cellules peuvent également être détachées du filtre par lavage avec un tampon approprié pour accéder à l'extraction et analyse de leurs ADN, ARN et protéines.

Les éléments isolés par filtration sont alors examinés au microscope et l'analyse des images obtenues sur le filtre peut être effectuée manuellement ou par des moyens automatisés, en particulier en utilisant des appareils d'analyse d'image.

Le procédé peut également être utilisé pour épurer un liquide biologique tel que de l'urine contenant en solution de l'ADN ou de l'ARN ou des protéines qu'on veut analyser. L'épuration du liquide a pour but d'éliminer toutes les particules biologiques présentes dans le liquide, qui pourraient perturber l'analyse. Dans ce cas, les filtres ne sont pas conservés et c'est le liquide filtré qui est analysé.

Cette méthode de filtration ainsi que les méthodes de préparation d'échantillon et d'analyse peuvent notamment être utilisées comme on l'a dit précédemment à des fins de diagnostic afin de détecter des pathologies associées à la présence de cellules particulières éventuellement en quantité extrêmement faible. En particulier, le procédé peut être utilisé pour détecter des cellules cancéreuses qui auraient été libérées dans le sang d'un patient au cours d'une opération chirurgicale. L'homme du métier connaît les cellules qui peuvent être à rechercher pour détecter telle ou telle pathologie.

Pour que ces analyses soient faites dans des conditions de fiabilité satisfaisantes, notamment dans le cadre d'hôpitaux ou de laboratoires d'analyses médicales, il est souhaitable que les appareillages mis en oeuvre assurent une bonne reproductibilité et une bonne fiabilité des conditions de réalisation des analyses. Pour ce faire, les inventeurs ont développé des dispositifs adaptés à la réalisation de ces analyses dans des conditions de fiabilité satisfaisantes.

On va maintenant décrire ces dispositifs.

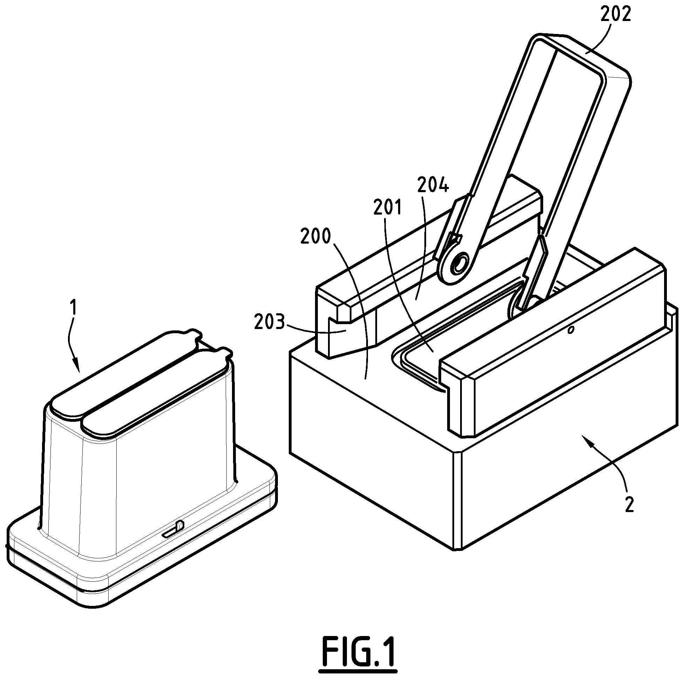

Afin de réaliser les analyses dans des conditions satisfaisantes de fiabilité, les liquides à filtrer sont recueillis dans un module de filtration de préférence à usage unique repéré généralement par 1 à la figure 1 et destiné à être monté sur un bloc support repéré généralement par 2, faisant parti de la machine de filtration (qui n'est pas représentée dans son ensemble sur la figure).

Le module de filtration 1 est placé sur le bloc support pour effectuer la filtration. Lorsque la filtration est finie, le module de filtration 1 est retiré du bloc support 2 et le filtre qui est contenu dans le module de filtration est retiré pour pouvoir effectuer des analyses comme cela sera expliqué plus loin.

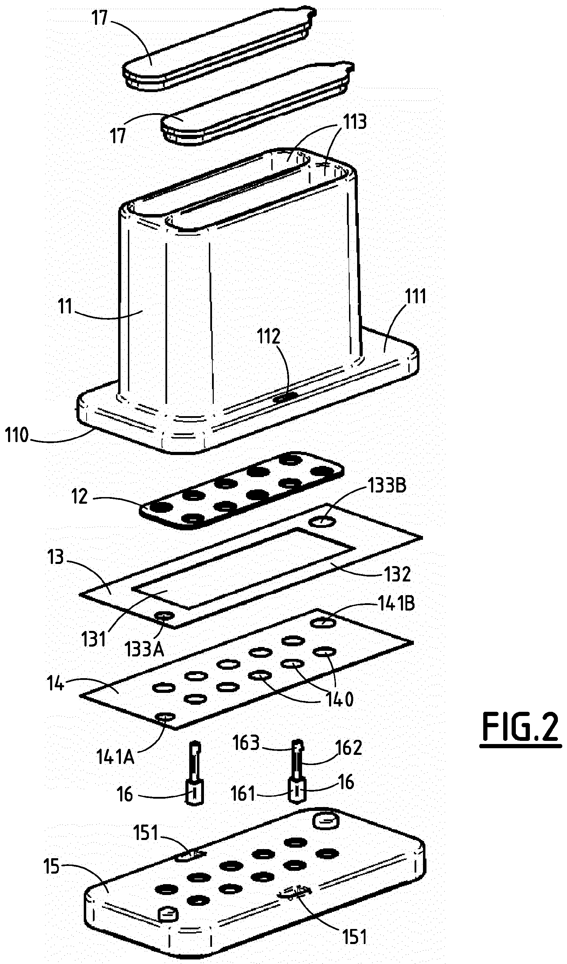

Le module de filtration 1, représenté de façon éclatée à la figure 2, est constitué d'un empilage comprenant, du haut vers le bas, un bloc réservoir 11, un joint strié 12, un filtre 13, un joint plaque 14 et un tiroir support de filtre 15.

Le filtre 13 est plaqué contre la face inférieure 110 du bloc réservoir 11 par l'intermédiaire du tiroir support de filtre 15, l'étanchéité entre le filtre 13 et le bloc réservoir 11 étant assurée par le joint strié 12, et l'étanchéité entre le filtre 13 et le tiroir support de filtre 15 étant assurée par le joint plaque 14.

Lorsque l'assemblage est monté, le tiroir support filtre est maintenu en position contre le bloc réservoir 11 par l'intermédiaire de deux axes d'assemblage 16 qui passent à travers des trous 151 du tiroir support de filtre et viennent s'accrocher dans des trous 112 prévus dans un rebord inférieur 111 du bloc réservoir 11, s'étendant vers l'extérieur.

Le bloc réservoir 11, en matière plastique, comporte un corps 114 divisé en deux compartiments 113 ouverts à leur partie supérieure 115 et fermés à leur partie inférieure par un fond 116 comportant une pluralité d'ouvertures circulaires 117 de diamètre compris entre 0,6 cm et 2 cm. Le fond comporte en outre un rebord 111 formant collerette dans lesquels sont prévus sur les deux parties latérales du bloc réservoir des ouvertures 112 destinées à recevoir les crochets des axes d'assemblage 16. Les compartiments 113 peuvent être fermés à leur partie supérieure par des bouchons amovibles 17. Les congés de raccordement du fond et des parois de chaque compartiment sont arrondis de façon à ne créer aucune zone de rétention de particules à filtrer.

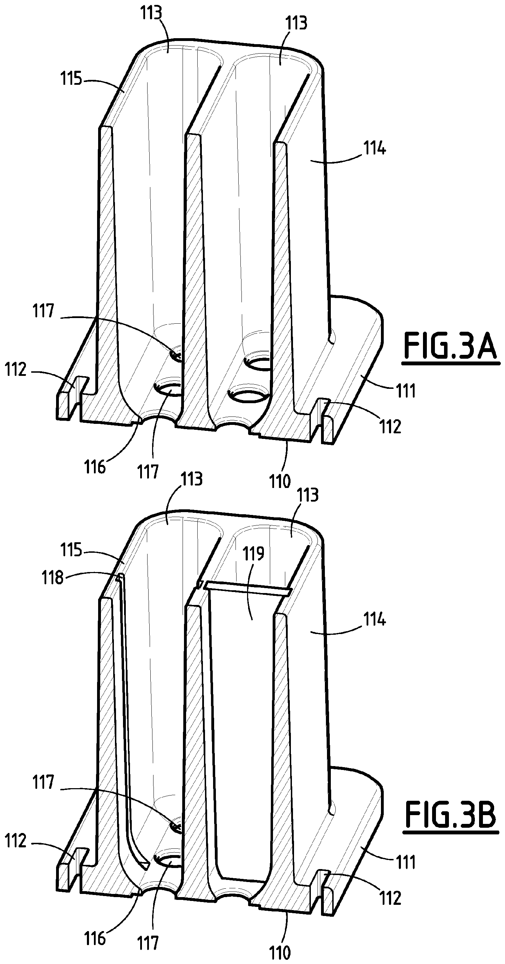

Comme on peut le voir sur la figure 3B, les compartiments 113 peuvent comporter des rainures verticales 118 destines à recevoir des lames de séparation 119 permettant de diviser les compartiments 113 en des compartiments partiels de plus faible volume. Les rainures 118 sont disposées de façon telle que les éventuelles lames de séparation 119 soient toujours disposées entre deux ouvertures circulaires 117.

Afin d'assurer une filtration adaptée, le volume des compartiments est proportionnel au nombre d'ouvertures circulaires 117, de telle sorte que le volume total du compartiment ou plus exactement la quantité de liquide maximale que peut recevoir le compartiment est comprise entre 0,14 ml/ cm² et 40 ml/ cm² multiplié par la somme des surfaces des ouvertures que comporte le fond du compartiment. En particulier la hauteur du compartiment et la section du fond est telle que non seulement ces conditions sont respectées pour un compartiment complet mais également pour qu'elles soient respectées par tout compartiment partiel délimité par l'intermédiaire d'une ou de plusieurs parois amovibles de séparation 119 étanches. En particulier, lorsque une ouverture 117 est isolée par deux parois amovibles 119, ou par une paroi amovible 119 et par la paroi du compartiment, de façon à ne comporter qu'une ouverture 117 dans le fond, le volume situé au-dessus de l'ouverture 117 est adapté pour recevoir au maximum 20 ml de liquide à filtrer. A titre d'exemple, chaque compartiment peut avoir un volume de 110 ml et comporter 5 ouvertures dans le fond.

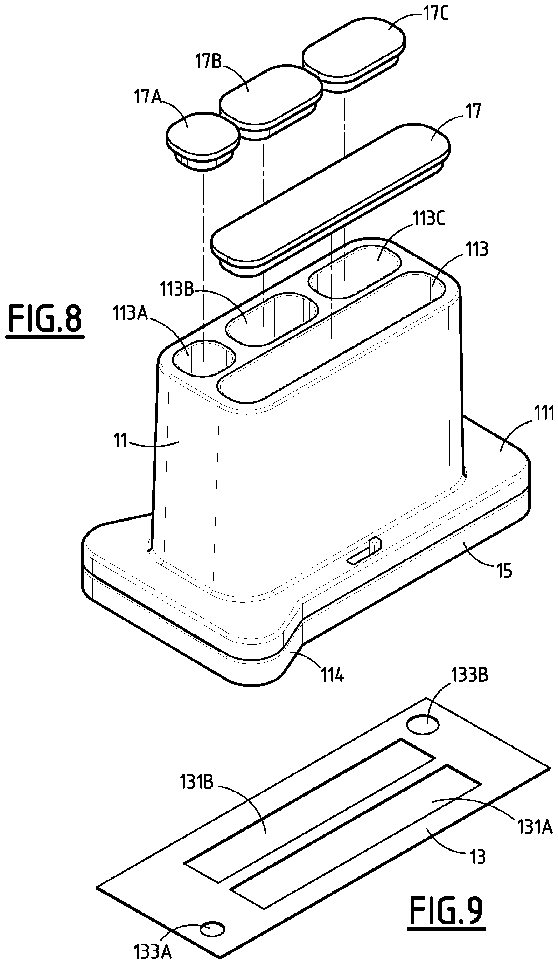

Dans une variante représentée à la Figure 8, le bloc réservoir 11 comprend un compartiment 113, comportant cinq zones élémentaires de filtration, un compartiment 113 A comportant une zone élémentaire de filtration et deux compartiments 113 B comportant deux zones élémentaires de filtration. Chaque compartiment comprend un bouchon amovible 17, 17A, 17B. On notera qu'avec cette disposition, il est possible de choisir le nombre de zones élémentaires de filtration utilisées entre 1 et 10.

Sur sa face inférieure 110, le bloc réservoir comporte deux trous de diamètre différents (non visibles sur la figure) disposés en diagonale, destinés à coopérer avec des pions 153A et 153B du tiroir support de filtre 15, afin d'assurer le positionnement précis et le repérage de la position du filtre par rapport au fond du bloc réservoir.

Le joint strié 12 disposé juste en dessous du bloc réservoir est un joint en silicone moulé comportant une pluralité de trous 121 destinés à venir en regard des ouvertures 117 prévues dans le fond du bloc réservoir, ces trous 121 étant entourés de lèvres 122, et de préférence de deux lèvres, circulaires destinées à assurer une bonne étanchéité. Le joint peut en outre comporter des nervures longitudinales 123 de séparation d'une première série de trou et d'une deuxième série de trou, de façon à assurer la séparation entre les trous qui sont en regard d'un premier compartiment et les trous qui sont en regard du deuxième compartiment du bloc réservoir. Ce joint a pour fonction d'assurer une parfaite étanchéité entre chacun des trous de façon à ce que le liquide qui passe à travers un trou ne puisse pas se mélanger avec du liquide passant par un autre trou, ce qui permet de filtrer simultanément deux liquides différents. Les lèvres en saillie 122, et éventuellement 123, sont disposées sur la face 124 du joint destiné à coopérer avec la partie inférieure du bloc réservoir 11. La deuxième face 125 du joint, destinée à coopérer avec le filtre 13, est plate.

Le filtre 13, qui constitue un badge de forme générale rectangulaire et qui est plat, comporte une zone centrale de filtration 131 constituée d'une membrane en polycarbonate microporeuse de 100 µm d'épaisseur environ et ayant une porosité adaptée au procédé. Cette partie centrale est fixée à l'aide d'une colle biologique sur un cadre 132 en PVC qui peut être utilisé pour saisir le badge et pour y porter des inscriptions permettant de le référencer. Le cadre 132 comporte des moyens de positionnement et de repérage de l'orientation du badge constitués par deux trous 133A et 133B disposés en diagonale sur le badge et ayant des diamètres différents et destinés à coopérer avec les pions 153A et 153B du support de filtre. Avec cette disposition des trous de repérage 133A et 133B, une seule orientation est possible pour disposer le badge sur un support comportant des pions de repérage complémentaires des trous 133A et 133B. Cela permet de repérer très exactement l'orientation du badge d'une part lorsqu'il est disposé dans le module de séparation et d'autre part lorsque il est disposé sur un appareil d'analyse tel qu'un équipement de coloration ou de lecture sous microscope.

Dans une variante représentée à la Figure 9, le badge comporte deux zones de filtration centrales 131 A, 131 B, parallèles entre elles et qui peuvent comporter des membranes de porosités différentes.

Le joint plaque 14 est un joint plaque plat en silicone comportant des ouvertures circulaires 140 correspondant aux ouvertures 121 du joint strié et aux ouvertures 117 prévues dans le fond du bloc réservoir. Il comporte également des trous 141 A et 141 B de diamètres différents correspondant aux trous 133A et 133B du filtre.

Le tiroir support de filtre 15 est une plaque en matière plastique injectée comportant une face supérieure 150 destinée à serrer l'assemblage du filtre et de joints contre la face inférieure 110 du bloc réservoir 11. Cette plaque support de filtre comporte une série de trous 152 destinés à venir en regard des trous correspondants 140 du joint plaque, 121 du joint strié et 117 du bloc réservoir.

La face supérieure 150 du tiroir support de filtre comporte en outre des pions 153A et 153B destinés à coopérer avec les trous de repérage 133A et 133B du badge filtre 13, avec les trous correspondants 141 A et 141 B du joint plaque 14 et avec les trous de centrage prévus sur la face inférieure 110 du bloc réservoir.

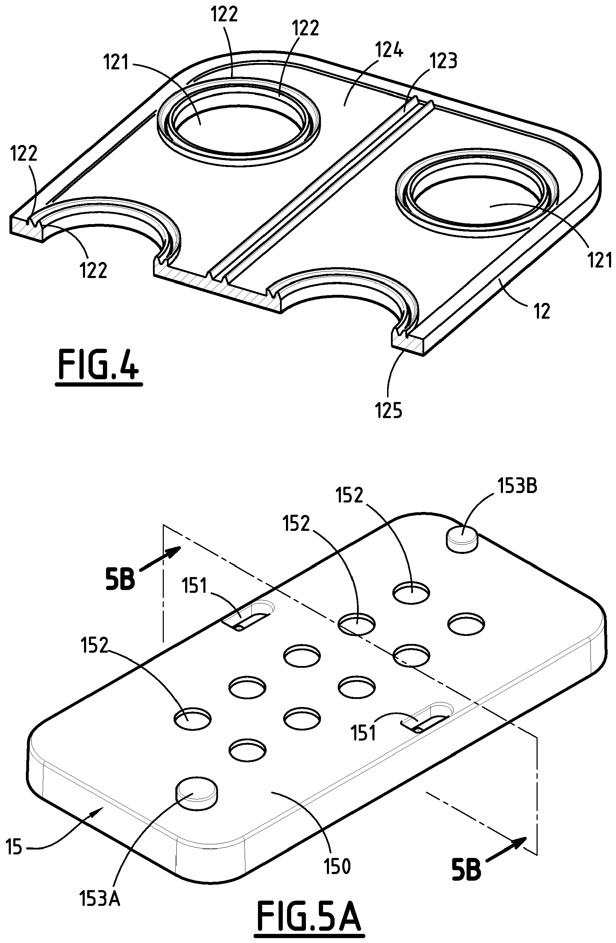

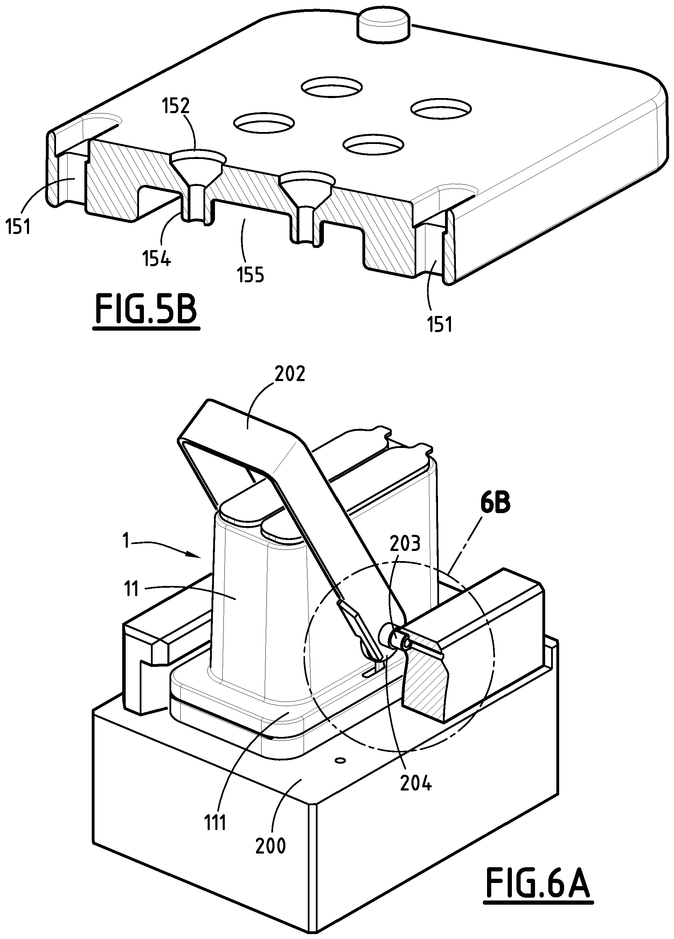

Comme on peut le voir sur la figure 5B, les trous 152 destinés à laisser passer le liquide filtré comportent une partie supérieure en forme d'entonnoir qui se prolonge par des petits tubes 154 en saillie sur la face inférieure 155 du tiroir support de filtre 15. Les petits tubes 154 en saillie par rapport à la face inférieure 155 du tiroir support de filtre ont pour fonction d'assurer un bon écoulement du liquide après filtration de façon à ne pas former de gouttes qui viendraient mouiller la face inférieure du support de filtre. On notera que le diamètre de la partie supérieure des trous 152, de même que les diamètre des trous 140 du joint plaque et 151 du joint strié, sont sensiblement égaux au diamètre des trous 117 prévus dans le fond du bloc réservoir, afin de délimiter sur le filtre des zones de filtration élémentaires de diamètre correspondant. La plaque tiroir support de filtre 15 comporte en outre sur ses deux bordures latérales des trous 151 destinés à recevoir les axes d'assemblage 16. Ces trous ont des formes adaptées pour pouvoir introduire les axes d'assemblage et bloquer l'ensemble en position lorsque on assure le montage de l'ensemble du module de filtration.

Les axes d'assemblage 16 comportent chacun une tête 161 surmontée par une tige 162, de diamètre plus faible, dont l'extrémité constitue un crochet 163. La longueur de l'axe d'assemblage est adaptée pour permettre le verrouillage de l'empilement constitué du tiroir support de filtre, des joints et du filtre lorsqu'il est plaqué contre le bloc réservoir. Ainsi, un axe d'assemblage a une longueur suffisante pour que, lorsqu'il est introduit dans un trou 151 du tiroir support de filtre, il puisse pénétrer dans le trou 112 du rebord inférieur du bloc réservoir 11, de telle sorte que le crochet 163 situé à l'extrémité de l'axe d'assemblage puisse venir s'accrocher sur la surface supérieure du rebord 111 du bloc réservoir, la tête 161 de l'axe d'assemblage 16 venant coopérer avec la face inférieure du tiroir support de filtre 15 de façon à maintenir verrouillé le tiroir support de filtre contre le fond du bloc réservoir 11.

Le module de filtration tel qu'il vient d'être décrit est destiné à être disposé sur un bloc support 2 de module de filtration qui comporte d'une part une face d'appui 200 comportant une ouverture centrale 201 destinée à venir en regard de l'ensemble des ouvertures de la face inférieure d'un bloc de filtration, d'autre part un levier 202 pivotant autour d'un axe 203 destiné à manoeuvrer deux excentriques 204 (un seul visible sur la figure) destinés à assurer un bon serrage de la partie inférieure du module de filtration contre la surface 200 du bloc support, et à assurer par là même un bon serrage du bloc réservoir 11 contre le tiroir support de filtre 15 pendant les opérations de filtration.

Dans une variante préférée, représentée à la Figure 8, le rebord inférieur 111 du bloc réservoir et, éventuellement le tiroir support de filtre 15, comportent à une extrémité, une partie élargie 114 destinée à coopérer avec une partie élargie 203 de la glissière 204 du bloc support 2 destinée à recevoir la base du module de filtration. Cette disposition permet d'imposer une orientation du module de filtration par rapport au bloc support.

Lorsque le module de filtration 1 est disposé sur le bloc support 2, les excentriques sont en regard du rebord 111 du bloc réservoir 11, de tel sorte que, lorsque le levier est dans une position d'ouverture, les excentriques laissent de la place au rebord 111 pour coulisser sur la face supérieure 200 du bloc support, et lorsque le levier est en position de serrage, les excentriques viennent appuyer fortement sur le rebord 111 du bloc réservoir 11, de façon à serrer l'ensemble constitué par le bloc filtration, le filtre, le support de filtre, ainsi que les joints associés, contre la face 200 du support de module de filtration.

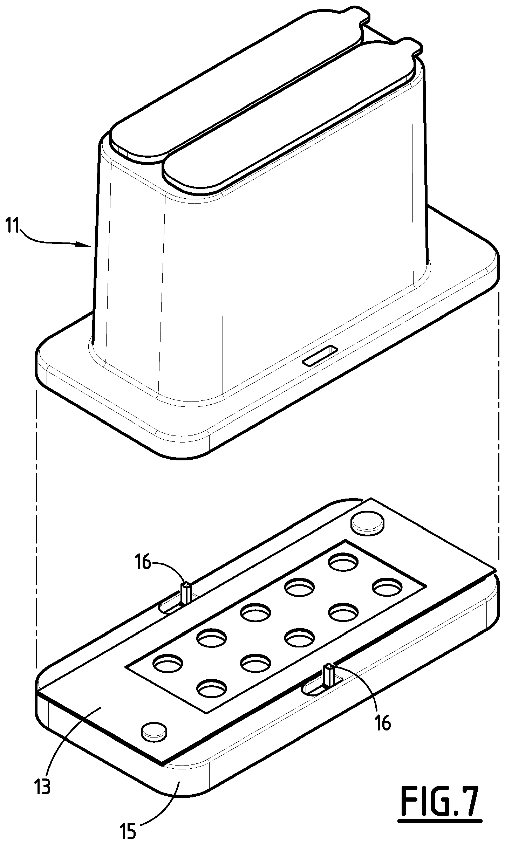

En outre, chaque excentrique comporte une palette 205 en saillie vers l'extérieur, qui, au moment du serrage du rebord du module de filtration vient coopérer avec l'extrémité de l'axe d'assemblage 16 correspondant, de façon à casser le crochet de tel sorte que, quand le serrage complet est assuré, le crochet de l'axe d'assemblage est cassé. Du fait de cette dernière disposition, lorsque le module de filtration est serré contre le bloc support 2 par l'intermédiaire de l'excentrique, l'ensemble est maintenu par le serrage, alors que, après desserrage de l'excentrique, la tête du crochet étant cassée, le bloc support de filtre et le bloc réservoir ne sont plus solidarisés comme représenté à la figure 7. Cela permet de prélever le filtre, et en même temps, rend le module de filtration inutilisable pour une autre analyse. Ainsi, le module de filtration est à usage unique.

On peut également utiliser un bloc ne comprenant pas de crochets sécables. Un tel bloc peut alors être utilisé pour un usage répété, ce qui est moins fiabilisé que l'usage unique, mais qui néanmoins peut présenter de l'intérêt dans certains cas.

Avant toute utilisation, le module de filtration est fermé par les bouchons supérieurs et stérilisés. Lorsque l'on souhaite effectuer une filtration d'un échantillon à des fins d'analyse, on prend un module de filtration stérilisé qu'on dispose sur un bloc support d'une machine de filtration. A l'aide du levier de serrage, on verrouille le module de filtration sur la machine de filtration en assurant un bon serrage de la plaque support de filtre contre le fond du bloc réservoir. Ce faisant et lorsque le module est à usage unique, on brise les extrémités comportant des crochets des axes d'assemblage. On ouvre alors au moins l'un des compartiments dans lequel on introduit le liquide à filtrer de telle sorte que, dans chaque compartiment, le rapport de quantité de liquide contenue à la somme des surfaces des ouvertures du fond du compartiment soit comprise entre 0,14 et 40 ml/ cm². On effectue alors la filtration. Une fois que la filtration effectuée, on déverrouille le système en relevant le levier de serrage, et on retire le module de filtration.

Sur ce module de filtration, la partie inférieure constituée par la plaque support de filtre est désolidarisée du bloc réservoir. On sépare donc l'ensemble puis on prélève le filtre que l'on dispose sur la platine d'un microscope d'observation, éventuellement après avoir effectué un certain nombre de préparations à l'aide de réactifs de façon à pouvoir observer convenablement les cellules qui éventuellement ont été retenues par le filtre.

Le reste du dispositif à savoir le réservoir, le support de filtre et le joint sont alors mis à la poubelle de façon à ne pas être réutilisés. Ce dispositif à usage unique a l'avantage d'assurer une bonne sécurité d'analyse. En effet, le même dispositif n'est utilisé que pour l'analyse d'un seul prélèvement, ce qui évite tout risque de pollution d'un prélèvement par des prélèvements antérieurs qui auraient été analysés à l'aide du même dispositif. En outre, du fait des caractéristiques géométriques particulières à la fois des trous disposés au fond du réservoir et des tailles du réservoir, les quantités de liquide filtré par le dispositif sont adaptées pour que les quantités filtrées sur chacune des zones élémentaires de filtration du filtre répondent aux conditions imposées par le procédé pour obtenir des résultats fiables.

## Revendications

1. Module de filtration (1) pour la mise en oeuvre d'un procédé pour rechercher des cellules rares en suspension dans un échantillon d'un liquide biologique; du type comprenant:
- un bloc réservoir (11) comprenant au moins un compartiment (113) fermé à sa partie inférieure par un fond (116) comportant au moins une ouverture (117) ;
- un tiroir support de filtre (15) comprenant au moins un trou (152), chaque trou étant disposé en regard d'une ouverture (117) du bloc réservoir ;
- un filtre (13) enserré entre la face inférieure (110) du bloc réservoir et le tiroir support,
**caractérisé en ce que** ledit filtre comprenant des pores calibrés d'une taille comprise entre 3 µm et 100 µm et une densité de pores comprise entre 3 x 10³ et 5 x 10⁶ pores/ cm², **en ce que** les dimensions de chaque ouverture (117) du fond du bloc réservoir et les dimensions de chaque trou (152) du tiroir support de filtre sont adaptées pour que chaque couple constitué d'une d'ouverture du fond du bloc réservoir et du trou du tiroir support de filtre associé, définissent une zone de filtration élémentaire de surface limitée, **en ce que** le volume utile de chaque compartiment est proportionnel au nombre de zones élémentaires de filtration situées au fond du compartiment, **en ce que** la surface d'une zone élémentaire de filtration est égale à celle d'un disque ayant un diamètre compris entre 0,6 cm et 3 cm, et **en ce que** le rapport du volume utile de chaque compartiment (113) à la somme des surfaces des zones élémentaires de filtration est entre 0,14 ml/cm² et 40 ml/cm².

2. Module de filtration selon la revendication 1, dans lequel les dimensions d'au moins une ouverture (117) du fond du bloc réservoir et d'un trou correspondant (152) du tiroir support de filtre sont adaptées pour que la surface de la zone élémentaire de filtration correspondante soit supérieure ou égale à celle d'un disque de 0,8 cm de diamètre.

3. Module de filtration selon la revendication 1 ou la revendication 2, comprenant, en outre, un joint d'étanchéité strié (12) disposé entre le fond (110) du bloc réservoir (11) et le filtre (13), comportant au moins un trou (121) correspondant à un trou (117) du fond du bloc réservoir, le trou étant entouré d'au moins une lèvre (122) en saillie ; et comprenant, en outre, entre le filtre (13) et le support de filtre (15), un joint plaque (14) comportant au moins une ouverture (140) en regard d'un trou (152) du support de filtre (15).

4. Module de filtration selon l'une quelconque des revendications 1 à 3, dans lequel le filtre (13) constitue un badge dont la partie centrale comporte au moins une zone poreuse (131 , 131 A, 131 B) et dont la périphérie constitue un cadre (132) comportant des moyens d'indexation de sa position sur le support de filtre ; et dans lequel les moyens d'indexation sont au moins deux trous (133A, 133B) de diamètre différents destinés à coopérer avec des pions (153A, 153B) de diamètres correspondant prévus sur le support de filtre (15).

5. Module de filtration selon l'une quelconque des revendications 1 à 4, **caractérisé en ce que** le bloc réservoir (11) comporte, à sa partie inférieure, un rebord (111) s'étendant vers l'extérieur et coopérant avec au moins un axe d'assemblage (16) permettant de serrer le filtre (13) entre le support de filtre (15) et le bloc réservoir (11), l'axe d'assemblage (16) comportant une extrémité sécable (163) s'étendant au dessus du rebord du bloc réservoir.

## Patentansprüche

1. Filtrationsmodul (1) zur Durchführung des Verfahrens zum Untersuchen seltener Zellen in Suspension in einer Probe einer biologischen Flüssigkeit, wobei der Typ umfasst:
- eine Behältereinheit (11), welche mindestens eine Kammer (113) umfasst, deren unterer Teil durch einen Boden (116) mit mindestens einer Öffnung (117) geschlossen ist;
- einen Filterträger-Einschub (15), welcher mindestens ein Loch (152) umfasst, wobei jedes Loch gegenüber einer Öffnung (117) der Behältereinheit angeordnet ist;
- einen Filter (13), welcher zwischen der Unterseite (110) der Behältereinheit und dem Träger-Einschub eingelegt wird,
**dadurch gekennzeichnet, dass** der Filter kalibrierte Poren mit einer Größe zwischen 3 µm und 100 µm und eine Porendichte zwischen 3 x 10³ und 5 x 10⁶ Poren/ cm² umfasst,
dass die Abmessungen jeder Öffnung (117) des Bodens der Behältereinheit und die Abmessungen jedes Lochs (152) des Filterträger-Einschubs so angepasst sind, dass jedes Paar, das aus einer Öffnung des Bodens der Behältereinheit und dem zugehörigen Loch des Filterträger-Einschubs gebildet wird, einen elementaren Filtrationsbereich von begrenzter Fläche definiert,
dadurch dass das Nutzvolumen jeder Kammer proportional ist zu der Anzahl von elementaren Filtrationsbereichen, die sich auf dem Boden der Kammer befinden,
dass die Fläche eines elementaren Filtrationsbereichs gleich derer einer Scheibe mit einem Durchmesser zwischen 0,6 cm und 3 cm ist und dadurch, dass das das Verhältnis des Nutzvolumens jeder Kammer (113) zu der Summe der Flächen der elementaren Filtrationsbereiche zwischen 0,14 ml/ cm² und 40 ml/ cm² beträgt.

2. Filtrationsmodul gemäß Anspruch 1, wobei die Abmessungen der mindestens einen Öffnung (117) des Bodens der Behältereinheit und eines entsprechenden Lochs (152) des Filterträger-Einschubs so angepasst sind, dass die Fläche des entsprechenden elementaren Filtrationsbereichs größer oder gleich derer einer Scheibe mit einem Durchmesser von 0,8 cm ist.

3. Filtrationsmodul gemäß einem der Ansprüche 1 bis 2, umfassend eine geriffelte Dichtung (12), welche zwischen dem Boden (110) der Behältereinheit (11) und dem Filter (13) angeordnet ist und welche mindestens ein Loch (121) enthält, das mit einer Öffnung (117) des Bodens der Behältereinheit übereinstimmt, wobei das Loch von mindestens einer hervorstehenden Lippe (122) umgeben ist; und umfassend eine Plattendichtung (14) zwischen dem Filter (13) und dem Filterträger (15), welche mindestens eine Öffnung (140) gegenüber einem Loch (152) des Filterträgers (15) enthält.

4. Filtrationsmodul gemäß einem der Ansprüche 1 bis 3, wobei der Filter (13) eine Plakette bildet, deren zentraler Teil mindestens einen porösen Bereich (131, 131 A, 131 B) enthält und deren Peripherie einen Rahmen (132) bildet, welcher Mittel zur Indexierung ihrer Position auf dem Filterträger enthält; und wobei die Indexierungsmittel mindestens zwei Löcher (133A, 133B) mit unterschiedlichem Durchmesser darstellen, welche dazu bestimmt sind, mit Stiften (153A, 153B) entsprechenden Durchmessers, die auf dem Filterträger

5. Filtrationsmodul gemäß einem der Ansprüche 1 bis 4, **dadurch gekennzeichnet, dass** die Behältereinheit (11) in ihrem unteren Teil einen Rand (111) enthält, welcher sich nach außen hin erstreckt und mit mindestens einem Verbindungsstift (16) zusammenwirkt, wodurch ermöglicht wird den Filter (13) zwischen dem Filterträger (15) und der Behältereinheit (11) einzuspannen, wobei der Verbindungsstift (16) ein teilbares Endstück (163) enthält, welches sich oben zu dem Rand der Behältereinheit hin erstreckt.

## Claims

1. Filtration module (1) for the implementation of a process for seeking rare characteristic cells in a biological fluid, of the type comprising:
- a chamber block (11) comprising at least one compartment (113) closed at its lower portion by a base (116) comprising at least one opening (117);
- a filter support drawer (15) comprising at least one hole (152), each hole being arranged facing an opening (117) of the chamber block;
- a filter (13) gripped between the lower face (110) of the chamber block and the support drawer,
**characterised in that** said filter comprises pores calibrated to a size of between 3 µm and 100 µm and the density of which is between 3 x 10³ and 5 x 10⁶ per cm²,
**in that** the dimensions of each opening (117) in the base of the chamber block and the dimensions of each hole (152) in the filter support drawer are adjusted such that each pair made up of an opening in the base of the chamber block and the associated hole in the filter support draw, define an elementary filtration area of limited surface,
**in that** the useful volume of each compartment is proportional to the number of elementary filtration areas situated in the base of the compartment,
**in that** the surface of an elementary filtration area is equal to that of a disk having a diameter of between 0.6 cm and 3 cm, and **in that** the ratio of the useful volume of each compartment (113) to the sum of the surfaces of the elementary filtration areas is between 0.14 ml/cm² and 40 ml/cm².

2. Filtration module according to claim 1, wherein the dimensions of at least one opening (117) in the base of the chamber block and the dimensions of a corresponding hole (152) in the filter support drawer are adapted such that the surface of the corresponding elementary filtration area is greater than or equal to that of a disk of 0.8 cm in diameter.

3. Filtration module according to claim 1 or claim 2, further comprising a grooved sealing joint (12) arranged between the base (110) of the chamber block (11) and the filter (13), comprising at least one hole (121) corresponding to a hole (117) in the base of the chamber block, the hole being surrounded by at least one projecting lip (122) ; and comprising a plate joint (14) between the filter (13) and the filter support (15), comprising at least one opening (140) facing a hole (152) in the filter support (15).

4. Filtration module according to any one of the claims 1 to 3, wherein the filter (13) forms a badge, the central portion of which comprises at least one porous area (131, 131 A, 131 B) and the periphery of which forms a frame (132) comprising means for indexing its position on the filter support; and wherein the indexation means are at least two holes (133A, 133B) of different diameter designed to cooperate with studs (153A, 153B) of corresponding diameter provided on the filter support (15).

5. Filtration module according to any one of the claims 1 to 4, **characterised in that** the chamber block (11) comprises, at its lower portion, a rim (111) extending outwards and cooperating with at least one assembly pin (16) allowing the filter (13) to be gripped between the filter support (15) and the chamber block (11), the assembly pin (16) comprising a breakable end (163) extending above the rim of the chamber block.
